# EUROPÄISCHE PATENTSCHRIFT

(11) **EP 3 425 283 B1**
(45) Veröffentlichungstag und Bekanntmachung des Hinweises auf die Patenterteilung: **01.09.2021**
(21) Anmeldenummer: 17425072.0
(22) Anmeldetag: 05.07.2017
(51) Int. Cl.: F24C 15/16, A47B 88/43, F16B 2/22, F16B 7/04

(54) **BEFESTIGUNGSANORDNUNG ZUM BEFESTIGEN EINES ABSTÜTZTEILS EINES GARGUTTRÄGERS, INSBESONDERE FÜR EIN GARGERÄT**
FASTENING ARRANGEMENT FOR FASTENING A SUPPORT PART OF A FOOD CARRIER, ESPECIALLY FOR A COOKING APPLIANCE
AGENCEMENT DE FIXATION POUR FIXER UNE PARTIE DE SOUTIEN D'UN SUPPORT DE CUISSON, NOTAMMENT POUR UN APPAREIL DE CUISSON

(43) Veröffentlichungstag der Anmeldung: 09.01.2019
(73) Patentinhaber: Apparatebau Gronbach S.R.L., 39004 Laag/Neumarkt (BZ) (IT)
(72) Erfinder: Meurer, Gerold, 39040 Margreid (BZ) (IT)
(74) Vertreter: Hofstetter, Schurack & Partner

(56) Entgegenhaltungen:
- EP-A1- 2 703 736
- US-A- 5 497 728
- US-A1- 2012 305 718

## Beschreibung

Die Erfindung betrifft eine Befestigungsanordnung eines zum Abstützen eines Gargutträgers ausgebildeten Abstützteils an einem Gestell, insbesondere für ein Küchen- beziehungsweise Haushaltsgerät, gemäß dem Oberbegriff von Patentanspruch 1.

Eine solche Befestigungseinrichtung zum Befestigen eines zum Abstützen eines Gargutträgers ausgebildeten Abstützteils an einem wenigstens zwei in horizontaler Richtung voneinander beabstandete und in vertikaler Richtung verlaufende Stangen aufweisenden Gestell sowie eine solche Befestigungsanordnung eines zum Abstützen eines Gargutträgers ausgebildeten Abstützteils an einem wenigstens zwei in horizontaler Richtung voneinander beabstandete und in vertikaler Richtung verlaufende Stangen aufweisenden Gestell sind beispielsweise bereits aus der DE 10 2013 013 034 A1 bekannt. Bei der Befestigungsanordnung ist das Abstützteil mittels der Befestigungseinrichtung an dem Gestell befestigbar beziehungsweise befestigt.

Des Weiteren offenbart die WO 2007/074114 A1 ein Schnellbefestigungselement zur Befestigung von Führungsschienen an horizontal verlaufenden und im Endbereich von einer Führungsschiene winklig abgebogenen Stangen eines gitterartigen Seitenteils.

Der DE 20 2009 003 045 U1 ist eine Schnellbefestigungseinrichtung zur Befestigung einer Führungsschiene an einer horizontal verlaufenden Stange als bekannt zu entnehmen. Außerdem ist aus der DE 10 2010 021 283 A1 eine Auszugsführung für ein Gerät bekannt, mit einer Führungsschiene und einer Laufschiene.

Außerdem offenbart die US 2012/305718 A1 eine Einrichtung zum Befestigen von Seitenschienen.

Darüber hinaus ist der EP 2 703 736 A1 eine Haltevorrichtung für eine Aufnahmeeinrichtung für einen Gargutträger als bekannt zu entnehmen.

Aufgabe der vorliegenden Erfindung ist es, eine Befestigungsanordnung der eingangs genannten Art derart weiterzuentwickeln, dass das Abstützteil auf besonders einfache Weise an dem Gestell befestigt werden kann.

Diese Aufgabe wird erfindungsgemäß durch eine Befestigungsanordnung mit den Merkmalen des Patentanspruchs 1 gelöst. Vorteilhafte Ausgestaltungen mit zweckmäßigen Weiterbildungen der Erfindung sind in den übrigen Ansprüchen angegeben.

Ein Aspekt betrifft eine Befestigungseinrichtung zum Befestigen eines zum Abstützen eines Gargutträgers ausgebildeten Abstützteils an einem wenigstens zwei in horizontaler Richtung voneinander beabstandete und in vertikaler Richtung verlaufende Stangen aufweisenden Gestell, insbesondere für ein Gerät, vorzugsweise für ein Küchen- beziehungsweise Haushaltsgerät. In vollständig hergestelltem Zustand des Geräts weist dieses einen Garraum wie beispielsweise eine Backmulde auf, wobei in dem Garraum beispielsweise Speisen erwärmt und insbesondere gegart werden können. Dabei ist beispielsweise das Gestell im vollständig hergestellten Zustand des Geräts in dem Garraum angeordnet, sodass mittels des Abstützteils der Gargutträger in dem Garraum abstützbar beziehungsweise abgestützt ist. Die in vertikaler Richtung verlaufenden Stangen werden auch als vertikale Stangen oder Vertikalstangen bezeichnet.

Um nun das Abstützteil auf besonders einfache und somit komfortable Weise an dem Gestell befestigen zu können, ist an der jeweiligen Stange (Vertikalstange) eine jeweilige Lasche vorgesehen, welche direkt von der jeweiligen Stange in horizontaler Richtung absteht und ein freies, vollständig von der jeweils anderen Stange beabstandetes Ende aufweist. Somit gehört beispielsweise die jeweilige Stange zu der Befestigungseinrichtung. Die jeweilige horizontale beziehungsweise vertikale Richtung bezieht sich insbesondere auf eine Einbaulage der Befestigungseinrichtung, die ihre Einbaulage in vollständig hergestelltem Zustand des Geräts einnimmt, wobei das Gerät in seinem vollständig hergestellten Zustand beispielsweise auf einer zumindest im Wesentlichen horizontalen Ebene steht. Bezogen auf die Einbaulage und somit bezogen auf den vollständig hergestellten Zustand des Geräts verlaufen die Stangen in vertikaler Richtung, das heißt zumindest im Wesentlichen senkrecht zur Horizontalen, wobei die Stangen in horizontaler Richtung voneinander beabstandet sind. Unter dem Merkmal, dass die Lasche direkt von der jeweiligen Stange in horizontaler Richtung, insbesondere bezogen auf die Einbaulage, absteht, ist insbesondere zu verstehen, dass die Lasche direkt von der jeweiligen Stange abzweigt und dabei direkt in horizontaler Richtung verläuft, sodass die Lasche nicht etwa zunächst in vertikaler Richtung oder in einer von der horizontalen Richtung unterschiedlichen Richtung verläuft und erst dann in die vertikale Richtung übergeht, sondern die Lasche erstreckt sich ausgehend von der Stange direkt und unmittelbar in horizontaler Richtung von der Stange weg.

Unter dem Merkmal, dass die Lasche das genannte freie, vollständig von der jeweils anderen Stange beabstandete Ende aufweist, ist insbesondere zu verstehen, dass die Lasche nicht etwa eine horizontale Stange ist, welche sich von der jeweiligen vertikalen Stange zur jeweils anderen vertikalen Stange vollständig durchlaufend erstreckt und mit den vertikalen Stangen beidenends verbunden ist, sondern die Lasche ist lediglich an der jeweiligen vertikalen Stange gehalten beziehungsweise mit dieser verbunden und von der jeweils anderen vertikalen Stange beabstandet.

Des Weiteren ist es vorgesehen, dass der jeweiligen Lasche ein mittels der Lasche, insbesondere reversibel lösbar, an der jeweiligen vertikalen Stange befestigbares beziehungsweise befestigtes Befestigungselement zugeordnet ist, über welches das Abstützteil an der jeweiligen vertikalen Stange, insbesondere reversibel lösbar, befestigbar ist. Mit anderen Worten ist es möglich, dass das Befestigungselement mittels der Lasche reversibel, das heißt zerstörungsfrei lösbar an der vertikalen Stange befestigbar beziehungsweise befestigt ist, sodass beispielsweise das Befestigungselement mittels der Lasche an der vertikalen Stange befestigt, daraufhin von der vertikalen Stange gelöst und daraufhin wieder mit der vertikalen Stange verbunden werden kann, ohne dass es zu Zerstörungen oder Beschädigungen des Befestigungselements oder der Stange kommt. Alternativ ist es denkbar, dass das Befestigungselement mittels der Lasche irreversibel lösbar an der vertikalen Stange befestigbar beziehungsweise befestigt ist, sodass beispielsweise das Befestigungselement mittels der Lasche an der Stange befestigt oder befestigbar ist und danach nur dadurch wieder von der Stange gelöst werden kann, dass die Stange beziehungsweise die Lasche und/oder das Befestigungselement beschädigt oder zerstört und dabei beispielsweise plastisch verformt wird.

Ferner ist es denkbar, dass das Abstützteil über das Befestigungselement an der jeweiligen vertikalen Stange reversibel und somit zerstörungsfrei lösbar befestigbar ist. Alternativ dazu ist es möglich, dass das Abstützteil über das Befestigungselement an der jeweiligen vertikalen Stange irreversibel, das heißt nicht-zerstörungsfrei lösbar befestigbar beziehungsweise befestigt ist.

Des Weiteren ist es vorgesehen, dass das Befestigungselement, insbesondere bezogen auf die Einbaulage, wenigstens eine in vertikaler Richtung nach unten offene und in vertikaler Richtung nach oben durch eine Abstützwandung des Befestigungselements begrenzte Stecköffnung aufweist. In die Stecköffnung ist die Lasche durch eine in vertikaler Richtung von oben nach unten verlaufenden und relativ zur Lasche erfolgende translatorische Bewegung des Befestigungselements einsteckbar beziehungsweise eingesteckt, um dadurch das Befestigungselement an der Lasche zu befestigen. Mit anderen Worten, um das Befestigungselement an der Lasche zu befestigen beziehungsweise abzustützen, wird beispielsweise das Befestigungselement relativ zu der Lasche in vertikaler Richtung von oben nach unten derart bewegt, dass die Lasche in vertikaler Richtung von unten nach oben eingesteckt wird. Insbesondere wird das Befestigungselement relativ zu der Lasche und relativ zu der jeweiligen Stange in vertikaler Richtung oben nach unten solange bewegt beziehungsweise wird die Lasche in vertikaler Richtung von unten nach oben solange in die Stecköffnung eingesteckt, bis die Abstützwandung in Stützanlage mit der Lasche kommt. Somit ist das Befestigungselement über die Abstützwandung in vertikaler Richtung nach unten an der Lasche abstützbar beziehungsweise abgestützt. Mit anderen Worten liegt beispielsweise das Befestigungselement in vertikaler Richtung von oben nach unten auf der Lasche auf, sodass das Befestigungselement mittels der Abstützwandung und mittels der Lasche gegen eine Bewegung in vertikaler Richtung nach unten relativ zu der Lasche und somit relativ zu der vertikalen Stange gesichert ist.

Insgesamt ist erkennbar, dass das Befestigungselement und somit das Abstützteil dadurch auf besonders einfache und somit komfortable sowie zeit- und kostengünstige Weise an der vertikalen Stange befestigt werden können, dass das Befestigungselement einfach relativ zu der Lasche und relativ zu der Stange in vertikaler Richtung von oben nach unten derart bewegt wird, dass die Lasche in vertikaler Richtung von unten nach oben in die Stecköffnung eingesteckt wird, insbesondere solange, bis die Lasche in Stützanlage mit der Abstützwandung kommt.

In einem Zustand, in welchem das Befestigungselement auf die beschriebene Weise an der Lasche und über diese an der vertikalen Stange befestigt ist, ist die Abstützwandung in vertikaler Richtung nach unten hin zumindest teilweise durch die Lasche überdeckt, wodurch das Befestigungselement über die Abstützwandung in vertikaler Richtung nach unten an der Lasche abgestützt und somit gesichert ist. Dieser Zustand ist insbesondere in der Einbaulage vorgesehen, in der beispielsweise das Gerät auf einer horizontalen Ebene steht. Die jeweilige vertikale Richtung verläuft dabei zumindest im Wesentlichen senkrecht zu der horizontalen Ebene, wobei die jeweilige horizontale Richtung zumindest im Wesentlichen parallel zur horizontalen Ebene verläuft.

Vorzugsweise ist das Befestigungselement separat von der Lasche ausgebildet und auf die beschriebene Weise mit der Lasche verbindbar beziehungsweise an dieser abstützbar oder befestigbar. Insbesondere ist es denkbar, dass das Befestigungselement und die Lasche als separat voneinander ausgebildete Bauteile ausgebildet sind, welche auf die beschriebene Weise miteinander verbindbar beziehungsweise aneinander abstützbar sind.

Vorzugsweise hat die Lasche zumindest in einem Längenbereich, insbesondere über ihre gesamte, in horizontaler Richtung verlaufende Erstreckung, einen zumindest im Wesentlichen rechteckigen Querschnitt, wodurch eine besonders vorteilhafte Befestigung realisierbar ist.

Ein Aspekt der Erfindung betrifft eine Befestigungsanordnung eines zum Abstützen eines Gargutträgers ausgebildeten Abstützteils an einem wenigstens zwei in horizontaler Richtung voneinander beabstandete und in vertikaler Richtung verlaufende Stangen aufweisenden Gestell. Bei der Befestigungsanordnung ist das Abstützteil mittels wenigstens einer Befestigungseinrichtung, insbesondere mittels wenigstens einer erfindungsgemäßen Befestigungseinrichtung, an dem Gestell, insbesondere reversibel oder irreversibel lösbar, befestigt.

Um nun das Abstützteil besonders einfach und komfortabel an dem Gestell befestigen zu können, ist erfindungsgemäß an der jeweiligen Stange eine jeweilige Lasche der Befestigungseinrichtung vorgesehen, wobei die Lasche direkt von der jeweiligen, in vertikaler Richtung verlaufenden Stange in horizontaler Richtung absteht und ein freies, vollständig von der jeweils anderen in vertikaler Richtung verlaufenden Stange beabstandetes Ende aufweist. Dabei ist der jeweiligen Lasche ein mittels der jeweiligen Lasche, insbesondere reversibel lösbar, an der jeweiligen Stange befestigtes und mit dem Abstützteil verbundenes Befestigungselement zugeordnet, über welches das Abstützteil an der jeweiligen Stange, insbesondere reversibel lösbar, befestigt ist.

Des Weiteren weist das Befestigungselement wenigstens eine in vertikaler Richtung nach unten offene und in vertikaler Richtung nach oben durch eine Abstützwandung des Befestigungselements begrenzte Stecköffnung auf, in welche zum Befestigen des Befestigungselements an der Lasche die Lasche durch eine in vertikaler Richtung von oben nach unten verlaufende und relativ zur Lasche erfolgende translatorische Bewegung des Befestigungselements eingesteckt ist. Dabei ist das Befestigungselement über die Abstützwandung in vertikaler Richtung nach unten an der Lasche abgestützt.

Der Erfindung liegt dabei insbesondere die folgende Erkenntnis zugrunde: Üblicherweise werden Gargutträger wie Backbleche oder Gitter, insbesondere GrillGitter, in einem Backofen beziehungsweise in einem Garraum seitlich an seitlichen Haltegittern befestigt, welche beispielsweise seitlich an jeweiligen, den Garraum insbesondere in horizontaler Richtung begrenzenden Wänden angebracht sind. Hierzu wird der jeweilige Gargutträger in das jeweilige Haltegitter beispielsweise eingeschoben. Ein solches Haltegitter weist üblicherweise vertikale Stangen, das heißt in vertikaler Richtung verlaufende Stangen auf, an die horizontale Auflagestangen in verschiedenen Ebenen angeschweißt sind. Die horizontalen Auflagestangen sind horizontale beziehungsweise horizontal verlaufende Stangen, die jeweils beidenends mit den jeweiligen vertikalen Stangen verbunden sind und somit keine freien Enden aufweisen. Die Auflagestangen sind stets paarweise an die vertikalen Stangen angeschweißt. Eine untere der Auflagestangen dient als Auflage, auf die der Gargutträger aufgelegt werden kann. Die jeweils obere der Auflagestangen dient als Kippschutz, sodass der Gargutträger nicht verkippen kann. Alternativ zu den horizontalen Auflagestangen können Auszugsschienen auf die beschriebene Weise an den vertikalen Stangen befestigt werden, oder Auszugsschienen werden an den Auflagestangen befestigt.

Herkömmlicherweise sind somit stets horizontal verlaufende und jeweils beidenends mit den vertikalen Stangen verbundene Stangen vorgesehen, um Abstützteile wie Auflagestangen oder Auszugsschienen an einem Gestell wie beispielsweise einem Haltegitter zu befestigen. Diese Befestigungsart führt dazu, dass der Garraum in seinem Volumen beeinträchtigt wird, und das jeweilige Abstützteil kann nur sehr aufwändig und unkomfortabel an den herkömmlichen Haltegittern befestigt werden.

Diese Probleme und Nachteile können nun mittels der Erfindung vermieden werden, da das Abstützteil direkt an der jeweiligen Lasche und somit besonders einfach und bauraumgünstig an der jeweiligen vertikalen Stange befestigt werden kann. Durchgängige horizontale Stangen, welche beidenends an den vertikalen Stangen befestigt sind, sind somit zum Befestigen des Abstützteils nicht vorgesehen und nicht erforderlich und kommen beispielsweise lediglich zum Einsatz, um die vertikalen Stangen miteinander zu verbinden und in der Folge das Gestell einfach handhaben zu können.

Eine weitere Erkenntnis ist, dass horizontale Auflagestangen, welche beispielsweise nicht genutzt werden, um Gargutträger abzustützen, nicht aus dem Garraum entnommen werden können und somit in dem Garraum verbleiben und dessen Volumen somit beeinträchtigen. Mittels der Erfindung können nun derartige, das Volumen des Garraums beeinträchtigende horizontale Stangen vermieden werden beziehungsweise die Anzahl an solchen horizontalen Stangen kann besonders gering gehalten werden. In der Folge können die Befestigungseinrichtung und somit das Gestell optisch unauffälliger und ansprechender als herkömmliche Lösungen ausgestaltet werden.

Das jeweilige Befestigungselement weist wenigstens ein der Abstützwandung in vertikaler Richtung gegenüberliegendes Abstützelement auf, über welche das Befestigungselement in vertikaler Richtung nach oben an der Lasche abstützbar beziehungsweise abgestützt ist. Dadurch wird das Befestigungselement nicht nur in vertikaler Richtung nach unten, sondern auch in vertikaler Richtung nach oben an der Lasche gesichert, sodass das Befestigungselement und über dieses das Abstützteil besonders sicher befestigt werden kann.

Außerdem greift das Abstützelement in eine Ausnehmung des Befestigungselements ein und ist dadurch in vertikaler Richtung nach unten an einem die Ausnehmung in vertikaler Richtung nach unten zumindest teilweise begrenzenden Wandungsbereich des Befestigungselements abstützbar oder abgestützt. Hierdurch kann das Befestigungselement in vertikaler Richtung nach oben besonders sicher an der Lasche fixiert werden. Ist beispielsweise das Befestigungselement auf die Lasche aufgesteckt beziehungsweise aufgeschoben und wird dann beispielsweise das Befestigungselement in vertikaler Richtung nach oben relativ zu der Lasche bewegt, so kommt dann beispielsweise das Abstützelement in Stützanlage mit der Lasche oder das Abstützelement befindet sich bereits in Stützanlage mit der Lasche. Wird dann beispielsweise eine in vertikaler Richtung nach oben wirkende Kraft auf das Befestigungselement ausgeübt, indem das Befestigungselement beispielsweise in vertikaler Richtung nach oben gezogen oder gedrückt wird, so kann, insbesondere wenn die Kraft ein entsprechendes Kraftniveau übersteigt, in vertikaler Richtung nach unten verformt werden. Sind keine entsprechenden Gegenmaßnahmen getroffen, so kann das Abstützelement auf die beschriebene Weise elastisch oder gar plastisch verformt werden, sodass das Abstützelement gegebenenfalls zerstört beziehungsweise beschädigt werden kann, und in der Folge kann das Befestigungselement von der Lasche abgezogen und somit demontiert werden.

Da nun jedoch das Abstützelement in die Ausnehmung eingreift und in vertikaler Richtung nach unten durch den Wandungsbereich des Befestigungselements überdeckt ist, kann sich das Abstützelement - wenn das Befestigungselement in vertikaler Richtung nach oben gezogen beziehungsweise gedrückt wird - an dem Wandungsbereich abstützen, ohne dass es zu einer übermäßigen, unerwünschten Verformung des Abstützelements kommt. Insbesondere kann durch den Wandungsbereich eine übermäßige elastische und insbesondere eine übermäßige plastische Verformung des Abstützelements vermieden werden, da beispielsweise eine von der Lasche auf das Abstützelement wirkende Kraft zumindest im Wesentlichen direkt von dem Abstützelement auf den Wandungsbereich übertragen und somit von dem stabilen Befestigungselement aufgenommen werden kann. Dadurch wird das Befestigungselement sicher an der Lasche und somit an der vertikalen Stange gehalten.

Außerdem ist es vorgesehen, dass das jeweilige Befestigungselement wenigstens eine Zunge aufweist, mittels welcher das jeweilige Befestigungselement an der jeweiligen Stange in horizontaler Richtung, insbesondere zur jeweils anderen Stange hin oder von der jeweils anderen Stange weg, abstützbar oder abgestützt ist. Hierdurch können das Befestigungselement und somit das Abstützteil nicht nur in vertikaler Richtung, sondern auch in horizontaler Richtung besonders vorteilhaft an den jeweiligen vertikalen beziehungsweise in vertikaler Richtung verlaufenden Stange gesichert werden, und das auf besonders einfache und kostengünstige Weise.

Dabei hat es sich als besonders vorteilhaft gezeigt, wenn die Ausnehmung als Durchgangsöffnung ausgebildet ist. Dadurch kann das Abstützelement besonders vorteilhaft an dem Wandungsbereich abgestützt werden.

Beispielsweise weist das Befestigungselement einen Grundkörper auf. Die insbesondere als Durchgangsöffnung ausgebildete Ausnehmung ist beispielsweise in oder an dem Grundkörper vorgesehen und somit eine Ausnehmung des Grundkörpers, sodass beispielsweise der Wandungsbereich ein Wandungsbereich des Grundkörpers ist. Der Grundkörper ist dabei besonders stabil, sodass sich das Abstützelement besonders vorteilhaft an dem stabilen Grundkörper abstützen kann.

Vorzugsweise ist das Abstützelement einstückig mit dem Grundkörper des Befestigungselements ausgebildet ist. Dadurch kann eine besonders vorteilhafte Abstützung dargestellt werden. Ferner ist es denkbar, dass das Abstützelement separat von dem Grundkörper ausgebildet und, insbesondere formschlüssig, an dem Grundkörper gehalten ist. Dadurch können eine besonders einfache Montage und Demontage realisiert werden. Dabei ist das Abstützelement beispielsweise mit dem Grundkörper verrastet beziehungsweise verklipst. Hierdurch ist eine besonders feste Halterung des Befestigungselements an der Lasche darstellbar.

Eine weitere Ausführungsform zeichnet sich dadurch aus, dass das Abstützelement als eine federnd an dem Grundkörper gehaltene Sperrfeder ausgebildet ist, über welche das Befestigungselement in vertikaler Richtung nach oben an der Lasche abstützbar ist. Die Sperrfeder ermöglicht die Realisierung einer besonders einfachen Montage und Demontage, da dann beispielsweise das Befestigungselement einfach und insbesondere ohne Werkzeug auf die Lasche gesteckt und von dieser abgezogen werden kann.

Die Sperrfeder ermöglicht es dabei, das Befestigungselement auf einfache Weise auf die Lasche aufklipsen zu können, indem das Befestigungselement in vertikaler Richtung von oben nach unten auf die Lasche aufgesteckt wird, wobei die Lasche auf die beschriebene Weise in die Stecköffnung eingesteckt wird. Bei diesem Aufstecken beziehungsweise Einstecken wird beispielsweise die Sperrfeder, insbesondere mittels der Lasche, elastisch verformt und elastisch verformt gehalten. Ist die Lasche dann soweit in die Stecköffnung eingesteckt, dass die Lasche sich in Stützanlage mit der Abstützwandung befindet, so kann beispielsweise die Sperrfeder elastisch zurückfedern, sodass beispielsweise die Sperrfeder - in der Einbaulage - in vertikaler Richtung nach oben zumindest teilweise von der Lasche überdeckt ist beziehungsweise sodass die Lasche zumindest teilweise in vertikaler Richtung nach unten von der Sperrfeder überdeckt ist. Dadurch kann das Befestigungselement beispielsweise dann und nur dann in vertikaler Richtung nach oben von der Lasche abgezogen werden, wenn die Sperrfeder relativ zu dem Grundkörper derart verformt wird, dass die Sperrfeder in vertikaler Richtung nach oben hin nicht mehr durch die Lasche überdeckt ist.

Ferner ist es zur Realisierung einer besonders stabilen Abstützung möglich, das Abstützelement als plastisch verformtes oder verformbares, insbesondere biegbares oder gebogenes, Abstützelement auszugestalten. Dabei ist das Abstützelement beispielsweise als Abstützzunge oder Abstützlasche ausgebildet, welche plastisch verformbar oder verformt ist, sodass dann das Befestigungselement über das plastisch verformbare beziehungsweise verformte Abstützelement in vertikaler Richtung nach oben an der Lasche abstützbar oder abgestützt ist. Das Aufstecken des Befestigungselements auf die Lasche erfolgt dann beispielsweise derart, dass die Lasche auf die beschriebene Weise in die Stecköffnung eingesteckt wird, bis sie in Stützanlage mit der Abstützwandung kommt. Dann wird beispielsweise das Abstützelement plastisch umgeformt, insbesondere umgebogen, sodass dann das Abstützelement in vertikaler Richtung nach oben hin durch die Lasche zumindest teilweise überdeckt ist. Dadurch ist das Abstützelement sicher an der Lasche gehalten. Der Einsatz der Sperrfeder ermöglicht jedoch die Realisierung einer besonders einfachen Montage.

Bei einer weiteren Ausführungsform kann vorgesehen sein, dass die jeweilige Lasche von der jeweiligen vertikalen Stange in horizontaler Richtung zur jeweils anderen Stange hin absteht, sodass beispielsweise die Laschen auf einander zugewandten Seiten der vertikalen Stangen angeordnet sind und dabei aufeinander zu verlaufen, ohne sich jedoch zu berühren.

Eine weitere, besonders vorteilhafte Ausführungsform zeichnet sich dadurch aus, dass die Abstützwandung einstückig mit dem Grundkörper ausgebildet ist. Dadurch kann eine besonders hohe Stabilität beziehungsweise Festigkeit des Befestigungselements geschaffen werden, sodass dieses besonders sicher an der Lasche und über diese an der vertikalen Stange gehalten werden kann.

Dabei hat es sich als besonders vorteilhaft gezeigt, wenn die Zunge einstückig mit der Abstützwandung ausgebildet ist. Dadurch kann eine besonders hohe Stabilität des Befestigungselements dargestellt werden.

Eine weitere Ausführungsform zeichnet sich dadurch aus, dass die Zunge einstückig mit dem Grundkörper ausgebildet ist, wodurch eine besonders hohe Stabilität des Befestigungselements realisiert werden kann. In der Folge können das Befestigungselement und somit das Abstützteil besonders fest an der vertikalen Stange gehaltert werden.

Um eine besonders stabile sowie einfache Befestigung des Befestigungselements an der vertikalen Stange realisieren zu können, ist es bei einer weiteren Ausführungsform der Erfindung vorgesehen, dass die jeweilige Lasche einstückig mit der jeweiligen vertikalen beziehungsweise in vertikaler Richtung verlaufenden Stange ausgebildet ist.

Dabei hat es sich als besonders vorteilhaft gezeigt, wenn die jeweilige Lasche als Prägelasche ausgebildet und somit durch Prägen der jeweiligen vertikalen Stange hergestellt ist.

Alternativ ist es denkbar, dass die vertikale Stange und die Lasche als separat voneinander ausgebildete und miteinander verbundene, insbesondere miteinander verschweißte, Bauteile ausgebildet sind. Durch die einstückige Ausgestaltung der Lasche mit der vertikalen Stange jedoch können die Teileanzahl und somit die Kosten und der Bauraumbedarf der Befestigungseinrichtung in einem besonders geringen Rahmen gehalten werden.

Schließlich zeichnet sich eine weitere Ausführungsform dadurch aus, dass das Abstützteil wenigstens eine in horizontaler Richtung verlaufende Stange oder eine Auszugsschiene aufweist. Die Stange kann beispielsweise einen zumindest im Wesentlichen runden Querschnitt, insbesondere Vollquerschnitt oder Hohlquerschnitt, aufweisen. Alternativ ist es denkbar, dass die Stange als ein Profil und dabei beispielsweise als ein U-Profil, als ein L-Profil oder als ein anderweitiges Profil, insbesondere mit einem offenen Querschnitt, insbesondere Hohlquerschnitt, ausgebildet ist.

Schließlich hat es sich als besonders vorteilhaft gezeigt, wenn das Gestell, das Abstützteil und die Befestigungseinrichtung in einem Garraum eines, insbesondere elektrischen, Gargeräts angeordnet sind. Die jeweilige vertikale Richtung beziehungsweise die jeweilige horizontale Richtung bezieht sich dabei insbesondere auf eine Einbaulage der Befestigungseinrichtung, des Abstützteils und des Gestells, die ihre jeweilige Einbaulage in vollständig hergestelltem Zustand des Gargeräts einnehmen. In seinem vollständig hergestellten Zustand des Gargeräts steht das Gargerät beispielsweise auf einer zumindest im Wesentlichen horizontalen Ebene, sodass sich dann die Befestigungseinrichtung sowie das Gestell und das Abstützteil in ihrer jeweiligen Einbaulage befinden. Bezogen auf die Einbaulage verläuft die vertikale Richtung zumindest im Wesentlichen senkrecht zur genannten horizontalen Ebene, wobei die jeweilige vertikale Richtung zumindest im Wesentlichen senkrecht zur horizontalen Richtung und dabei parallel zur horizontalen Ebene verläuft.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehen in der Beschreibung genannten Merkmale und Merkmalskombinationen sowie die nachfolgende in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: ausschnittsweise eine schematische Perspektivansicht einer ersten Ausführungsform einer erfindungsgemäßen Befestigungsanordnung, bei welcher ein zum Abstützen eines Gargutträgers ausgebildetes Abstützteil an einem wenigstens zwei in horizontaler Richtung voneinander beabstandete und in vertikaler Richtung verlaufende Stangen aufweisenden Gestell mittels wenigstens einer erfindungsgemäßen Befestigungseinrichtung befestigt ist;
- Fig. 2: ausschnittsweise eine weitere schematische Perspektivansicht der Befestigungsanordnung gemäß der ersten Ausführungsform;
- Fig. 3: ausschnittsweise eine weitere schematische Perspektivansicht der Befestigungsanordnung gemäß der ersten Ausführungsform;
- Fig. 4: ausschnittsweise eine schematische Seitenansicht der Befestigungseinrichtung gemäß der ersten Ausführungsform;
- Fig. 5: ausschnittsweise eine weitere schematische Seitenansicht der Befestigungseinrichtung gemäß der ersten Ausführungsform;
- Fig. 6: ausschnittsweise eine schematische Perspektivansicht der Befestigungseinrichtung gemäß der ersten Ausführungsform;
- Fig. 7: ausschnittsweise eine weitere schematische Perspektivansicht der Befestigungseinrichtung gemäß der ersten Ausführungsform;
- Fig. 8: eine schematische Seitenansicht der Befestigungsanordnung gemäß der ersten Ausführungsform;
- Fig. 9: eine schematische Perspektivansicht einer zweiten Ausführungsform der Befestigungsanordnung;
- Fig. 10: ausschnittsweise eine weitere schematische Perspektivansicht der Befestigungsanordnung gemäß der zweiten Ausführungsform;
- Fig. 11: ausschnittsweise eine weitere schematische Perspektivansicht der Befestigungsanordnung gemäß der zweiten Ausführungsform;
- Fig. 12: ausschnittsweise eine weitere schematische Perspektivansicht der Befestigungsanordnung gemäß der zweiten Ausführungsform; und
- Fig. 13: ausschnittsweise eine weitere schematische Perspektivansicht der Befestigungsanordnung gemäß der zweiten Ausführungsform.

In den Figuren sind gleiche oder funktionsgleiche Elemente mit gleichen Bezugszeichen versehen.

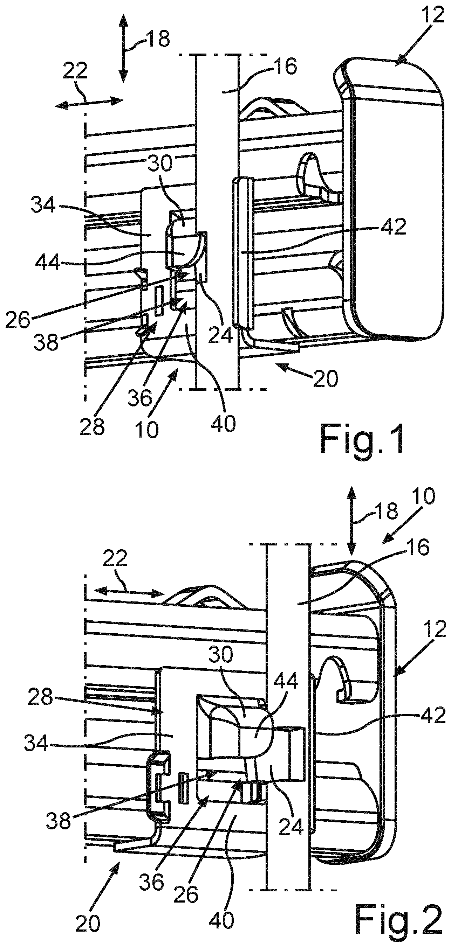

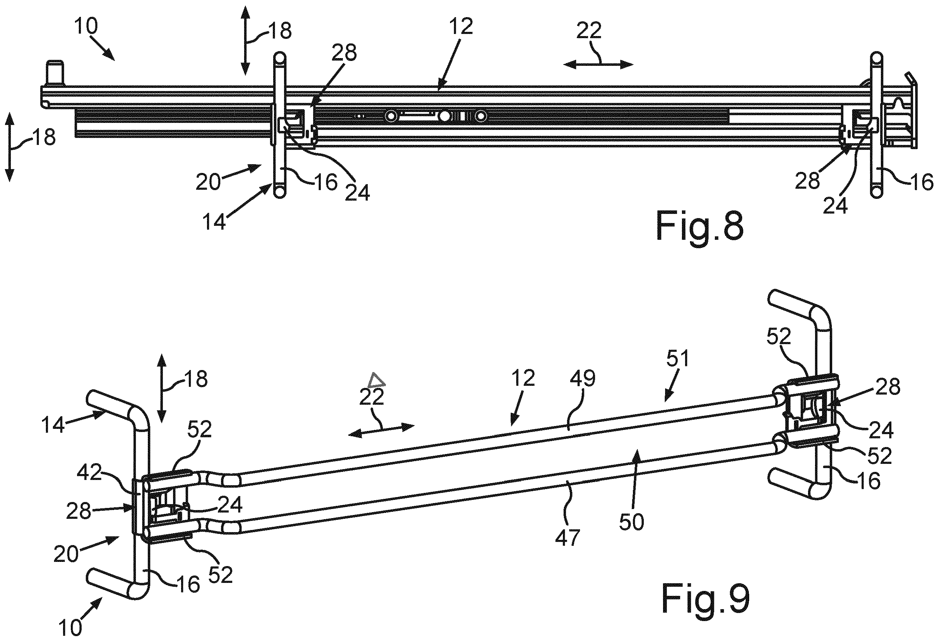

Fig. 1 zeigt ausschnittsweise in einer schematischen Perspektivansicht eine erste Ausführungsform einer Befestigungsanordnung 10, bei welcher ein zum Abstützen eines Gargutträgers ausgebildetes Abstützteil 12 an einem beispielsweise aus Fig. 8 erkennbaren Gestell 14 befestigbar ist. Besonders gut aus Fig. 8 ist erkennbar, dass das Gestell 14 wenigstens zwei in vertikaler Richtung verlaufende Stangen 16 aufweist, welche auch als vertikale Stangen bezeichnet werden. Dabei ist die vertikale Richtung durch einen Doppelpfeil 18 veranschaulicht. Die Stangen 16 sind dabei in horizontaler Richtung voneinander beabstandet, wobei die horizontale Richtung durch einen Doppelpfeil 22 veranschaulicht ist. Bei der Befestigungsanordnung 10 ist das Abstützteil 12 mittels wenigstens einer Befestigungseinrichtung 20 an der jeweiligen vertikalen Stange 16 befestigt. Bei der ersten Ausführungsform ist das Abstützteil 12 als Auszugsschiene ausgebildet, welche beispielsweise eine erste Schiene und wenigstens eine zweite Schiene aufweist. Die erste Schiene ist beispielsweise über die Befestigungseinrichtung 20 an dem Gestell 14 festgelegt, wobei die zweite Schiene beispielsweise in horizontaler Richtung relativ zur ersten Schiene und relativ zu dem Gestell 14 translatorisch bewegt werden kann.

Bei dem Gargutträger handelt es sich beispielsweise um ein Gitter, insbesondere um ein Grillgitter, oder um ein Backblech, welches auf das Abstützteil 12 aufgelegt und dadurch an dem Abstützteil 12, insbesondere in vertikaler Richtung nach unten, abgestützt werden kann. Mittels der zweiten Schiene kann beispielsweise der Gargutträger in horizontaler Richtung besonders vorteilhaft aus einem Garraum eines Gargeräts herausgefahren und wieder in den Garraum eingefahren werden, ohne beispielsweise den Gargutträger von dem Abstützteil 12 lösen zu müssen.

Die Befestigungseinrichtung 20, welche beispielsweise die Stangen 16 umfasst, sowie alternativ oder zusätzlich das Abstützteil 12, sind beispielsweise Bestandteile des Gargeräts, welches wenigstens einen Garraum aufweist. Dabei ist beispielsweise das Gestell 14 in dem Garraum angeordnet, wobei auch die Befestigungseinrichtung 20 in dem Garraum angeordnet ist. Die vertikale Richtung und die horizontale Richtung beziehen sich dabei auf eine Einbaulage der Befestigungseinrichtung 20, die ihre Einbaulage insbesondere in vollständig hergestelltem Zustand des Gargeräts einnimmt. In seinem vollständig hergestellten Zustand steht das Gargerät auf einer zumindest im Wesentlichen horizontalen Ebene, wobei die vertikale Richtung zumindest im Wesentlichen senkrecht zur horizontalen Ebene verläuft. Die jeweilige horizontale Richtung verläuft dabei zumindest im Wesentlichen parallel zu der horizontalen Ebene.

Um nun das Abstützteil 12 besonders einfach und somit komfortabel an dem Gestell 14 befestigen zu können, ist an der jeweiligen vertikalen Stange 16 eine jeweilige, besonders gut aus Fig. 2 und 4 bis 7 erkennbare Lasche 24 vorgesehen, die Bestandteil der Befestigungseinrichtung 20 ist. Die jeweilige Lasche 24 steht dabei direkt von der jeweiligen vertikalen Stange 16 in horizontaler Richtung ab und weist ein freies, vollständig von der jeweils anderen vertikalen Stange 16 beabstandetes Ende 26 auf. Die jeweilige Lasche 24 ist somit lediglich einenends an die jeweilige vertikale Stange 16 angebunden. Anderenends ist die jeweilige Lasche 24 nicht an die jeweils andere vertikale Stange 16 angebunden, sondern von der jeweils anderen vertikalen Stange 16 beabstandet und weist daher das freie Ende 26 auf.

Der jeweiligen Lasche 24 ist ein mittels der jeweiligen Lasche 24 an der jeweiligen vertikalen Stange 16 befestigbares beziehungsweise, insbesondere bei der Befestigungsanordnung 10, befestigtes Befestigungselement 28 der Befestigungseinrichtung 20 zugeordnet. Dabei ist das Abstützteil 12 über das Befestigungselement 28 sowie über die jeweilige Lasche 24 an der jeweiligen vertikalen Stange 16 befestigt beziehungsweise befestigbar. Das Befestigungselement 28 ist beispielsweise reversibel, das heißt zerstörungsfrei lösbar mit dem Abstützteil 12 verbunden. Alternativ ist es denkbar, dass das Befestigungselement 28 fest an dem Abstützteil 12 befestigt ist, sodass beispielsweise das Befestigungselement 28 irreversibel beziehungsweise nicht-zerstörungsfrei lösbar mit dem Abstützteil 12 verbunden ist.

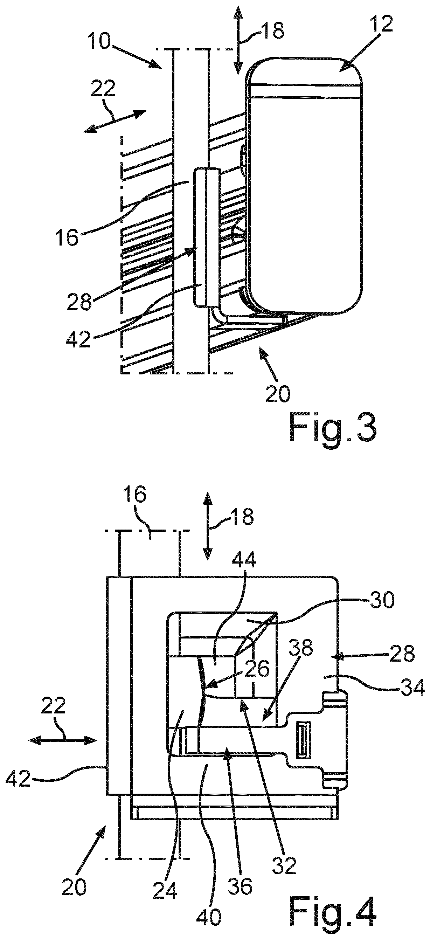

Wie besonders gut aus Fig. 4 erkennbar ist, weist das jeweilige Befestigungselement 28 wenigstens eine in vertikaler Richtung nach unten offene und in vertikaler Richtung nach oben durch eine Abstützwandung 30 des Befestigungselements 28 begrenzte beziehungsweise geschlossene Stecköffnung 32 auf, in welche zum Befestigen des Befestigungselements 28 an der Lasche 24 die Lasche 24 durch eine in vertikaler Richtung von oben nach unten verlaufende und relativ zur Lasche 24 und zur jeweiligen Stange 16 erfolgende translatorische Bewegung des Befestigungselements 28 einsteckbar ist. Mit anderen Worten kann das Befestigungselement 28 derart an der Lasche 24 und über diese an der jeweiligen vertikalen Stange 16 befestigt werden, dass das Befestigungselement 28, gegebenenfalls mit dem beziehungsweise über das Abstützteil 12, in vertikaler Richtung von oben nach unten relativ zu der Lasche 24 und relativ zu der Stange 16 bewegt wird, insbesondere derart, dass die Lasche 24 in vertikaler Richtung von unten nach oben in die Stecköffnung 32 eingesteckt wird. Hierdurch wird das Befestigungselement 28 auf die Lasche 24 aufgesteckt.

Das Befestigungselement 28 wird dabei solange in vertikaler Richtung nach unten relativ zu der Lasche 24 bewegt beziehungsweise die Lasche 24 wird in vertikaler Richtung nach oben solange in die Stecköffnung 32 eingesteckt, bis die Lasche 24 in Stützanlage mit der Abstützwandung 30 kommt. Dann ist das Befestigungselement 28 über die Abstützwandung 30 in vertikaler Richtung nach unten an der Lasche 24 abgestützt, sodass das Befestigungselement 28 in vertikaler Richtung nach unten über die Abstützwandung 30 an der Lasche 24 abstützbar ist. Dann liegt das Befestigungselement 28 über die Abstützwandung 30 auf der Lasche 24 auf, sodass das Befestigungselement 28 und über dieses das Abstützteil 12 in vertikaler Richtung nach unten an der Lasche 24 und über diese an der jeweiligen vertikalen Stange 16 gesichert sind.

Besonders gut aus Fig. 2 und 4 bis 7 ist erkennbar, dass das Befestigungselement 28 eine der Abstützwandung 30 in vertikaler Richtung gegenüberliegende, federnd an einem Grundkörper 34 des Befestigungselements 28 gehaltene Sperrfeder 36 aufweist, über welche das Befestigungselement 28 in vertikaler Richtung nach oben an der Lasche 24 abstützbar beziehungsweise abgestützt ist. Bei der ersten Ausführungsform ist die Sperrfeder 36 separat von dem Grundkörper 34 ausgebildet und an diesem, insbesondere formschlüssig, gehalten, wobei beispielsweise die Sperrfeder 36 mit dem Grundkörper 34 verrastet beziehungsweise verklipst ist.

Des Weiteren greift die Sperrfeder 36 in eine als Durchgangsöffnung ausgebildete Ausnehmung 38 des Grundkörpers 34 ein, sodass die Sperrfeder 36 in vertikaler Richtung nach unten an einem die Ausnehmung 38 in vertikaler Richtung nach unten zumindest teilweise begrenzenden Wandungsbereich 40 des Grundkörpers 34 abstützbar beziehungsweise abgestützt ist.

Befindet sich beispielsweise die Sperrfeder 36 in vertikaler Richtung nach oben bereits in Stützanlage mit der Lasche 24, so ist das Befestigungselement 28 über die Sperrfeder 36 an der Lasche 24 in vertikaler Richtung nach oben abgestützt. Ist beispielsweise zunächst ein Abstand zwischen der Sperrfeder 36 und der Lasche 24 vorgesehen, insbesondere in vertikaler Richtung, so ist das Befestigungselement 28 über die Sperrfeder 36 in vertikaler Richtung nach oben an der Lasche 24 abstützbar. Wird beispielsweise das Befestigungselement 28 mit einer in vertikaler Richtung nach oben wirkenden Kraft beaufschlagt, indem beispielsweise das Befestigungselement 28 in vertikaler Richtung nach oben gezogen oder gedrückt wird, so wird beispielsweise der genannten Abstand zwischen der Sperrfeder 36 und der Lasche 24 aufgehoben, sodass dann die Sperrfeder 36 in Stützanlage mit der Lasche 24 kommt beziehungsweise sich in Stützanlage mit der Lasche 24 befindet. Wird dann das Befestigungselement 28 weiter in vertikaler Richtung nach oben gedrückt oder gezogen, so wirkt von der Lasche 24 auf die Sperrfeder 36 eine Kraft, wodurch beispielsweise die Sperrfeder 36 in vertikaler Richtung nach unten verformt werden könnte. Eine solche Verformung der Sperrfeder 36 in vertikaler Richtung nach unten kann nun jedoch vermieden oder zumindest besonders gering gehalten werden, da sich die Sperrfeder 36 in vertikaler Richtung nach unten an dem Wandungsbereich 40 abstützen kann. Auf diese Weise kann eine übermäßige Verformung der Sperrfeder 36 vermieden werden. Insbesondere kann eine übermäßige elastische oder plastische Verformung der Sperrfeder 36 vermieden werden, sodass das Befestigungselement 28 in vertikaler Richtung nach oben sicher an der Lasche 24 gehalten ist.

Gleichzeitig kann das Befestigungselement 28 besonders einfach auf die Lasche 24 aufgesteckt werden. Hierzu wird beispielsweise die Sperrfeder 36, insbesondere mittels der Lasche 24, relativ zu dem Grundkörper 34 elastisch verformt und elastisch verformt gehalten, insbesondere solange, bis die Abstützwandung 30 in Stützanlage mit der Lasche 24 kommt. Dann kann die Sperrfeder 36 zurück federn und die Lasche 24 in vertikaler Richtung hintergreifen, sodass dann zumindest ein Teil der Sperrfeder 36 in vertikaler Richtung nach oben durch die Lasche 24 überdeckt ist. Dadurch ist das Befestigungselement 28 über die Sperrfeder 36 in vertikaler Richtung nach oben an der Lasche 24 abstützbar beziehungsweise abgestützt. Um dabei eine besonders hohe Stabilität des Befestigungselements 28 zu realisieren, ist die Abstützwandung 30 einstückig mit dem Grundkörper 34 ausgebildet.

Um eine besonders sichere Halterung des Befestigungselements 28 sowie des Abstützteils 12 an dem Gestell 14 realisieren zu können, weist das jeweilige Befestigungselement 28 - wie besonders gut aus Fig. 1, 3, 4 und 6 erkennbar ist - wenigstens eine Zunge 42 auf, mittels welcher das jeweilige Befestigungselement 28 an der jeweiligen vertikalen Stange 16 in horizontaler Richtung, insbesondere zur jeweils anderen vertikalen Stange 16 hin, abstützbar ist. Dabei ist die Zunge 42 beispielsweise einstückig mit der Abstützwandung 30 ausgebildet. Ferner ist die Zunge 42 einstückig mit dem Grundkörper 34 ausgebildet.

Des Weiteren ist es vorgesehen, dass die jeweilige Lasche 24 einstückig mit der jeweiligen vertikalen Stange 16 ausgebildet ist. Dabei ist die jeweilige Lasche 24 als Prägelasche ausgebildet und somit durch Prägen der jeweiligen vertikalen Stange 16 hergestellt.

Die Stecköffnung 32 ist beispielsweise auf einer dem Abstützteil 12 abgewandten Seite der Lasche 24 durch eine Wandung 44 des Befestigungselements 28 begrenzt, wobei die Wandung 44 beispielsweise einstückig mit dem Grundkörper 34 ausgebildet ist. Über die Wandung 44 kann sich das Befestigungselement 28 in horizontaler Richtung und dabei zum Abstützteil 12 hin an der Lasche 24 abstützen, sodass das Befestigungselement 28 mittels der Zunge 42 und mittels der Wandung 44 in zwei eine horizontale Ebene aufspannende, senkrecht zueinander verlaufende Richtungen an der Stange 16 zu sichern beziehungsweise gesichert ist.

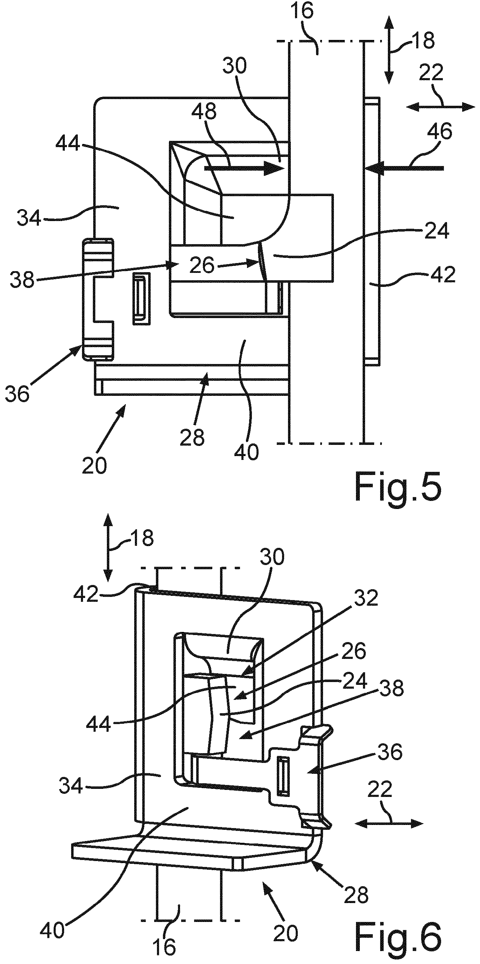

Wie in Fig. 5 durch einen Pfeil 46 veranschaulicht ist, ist das Befestigungselement 28 mittels der Zunge 42 in eine mit der horizontalen Richtung zusammenfallende und durch den Pfeil 46 verlaufende erste Richtung an der Stange 16 abstützbar beziehungsweise abgestützt. Durch die Wandung 44 ist das Befestigungselement 28 in eine mit der horizontalen Richtung zusammenfallende und der ersten Richtung entgegengesetzte sowie in Fig. 5 durch einen Pfeil 48 veranschaulichte zweite Richtung an der vertikalen Stange 16 abstützbar beziehungsweise abgestützt, sodass das Befestigungselement 28 weder in vertikaler Richtung nach vorne noch in vertikaler Richtung nach hinten übermäßig bewegt werden kann. Ferner kann das Befestigungselement 28 auch in horizontaler Richtung seitwärts nicht übermäßig bewegt werden, da es in eine senkrecht zur ersten Richtung und senkrecht zur zweiten Richtung verlaufende und mit der horizontalen Richtung zusammenfallende dritte Richtung über die Wandung 44 an der Lasche 24 und in eine senkrecht zur ersten Richtung und senkrecht zur zweiten Richtung verlaufende und der dritten Richtung entgegengesetzte vierte Richtung über den Grundkörper 34 an der vertikalen Stange 16 und/oder an der Lasche 24 abstützbar beziehungsweise abgestützt ist. In vertikaler Richtung nach unten ist das Befestigungselement 28 über die Abstützwandung 30 an der Lasche 24 abgestützt beziehungsweise abstützbar, und in vertikaler Richtung nach oben ist das Befestigungselement 28 über die Sperrfeder 36 an der Lasche 24 abgestützt beziehungsweise abstützbar.

Das Befestigungselement kann somit beispielsweise nur dadurch von der vertikalen Stange 16 demontiert werden, dass die Sperrfeder 36 derart und solange elastisch verformt wird, dass die Sperrfeder 36 aus der Ausnehmung 38 herausbewegt wird, bis die Sperrfeder 36 nicht mehr in vertikaler Richtung nach oben durch die Lasche 24 überdeckt ist. Dadurch kann das Befestigungselement 28 in vertikaler Richtung nach oben von der Lasche 24 abgezogen werden, insbesondere solange, bis die Lasche 24 in die vierte Richtung nicht mehr von der Wandung 44 überdeckt ist. Dann kann beispielsweise das Befestigungselement 28 auch in horizontaler Richtung von der Lasche 24 und somit von der vertikalen Stange 16 wegbewegt werden, sodass dann das Befestigungselement 28 und das Abstützteil 12 von der Lasche 24 beziehungsweise von der vertikalen Stange 16 vollständig demontiert werden können.

Insgesamt ist erkennbar, dass die Befestigungseinrichtung 20 sowohl eine besonders einfache Montage des Befestigungselements 28 an der Lasche 24 beziehungsweise an der Stange 16 ermöglicht, als auch eine besonders einfache Demontage des Befestigungselements 28 von der Lasche 24 beziehungsweise von der vertikalen Stange 16.

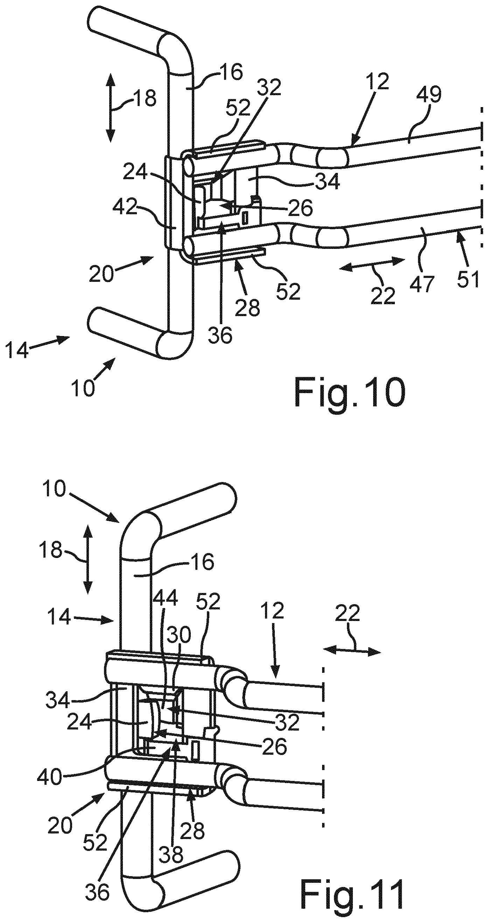

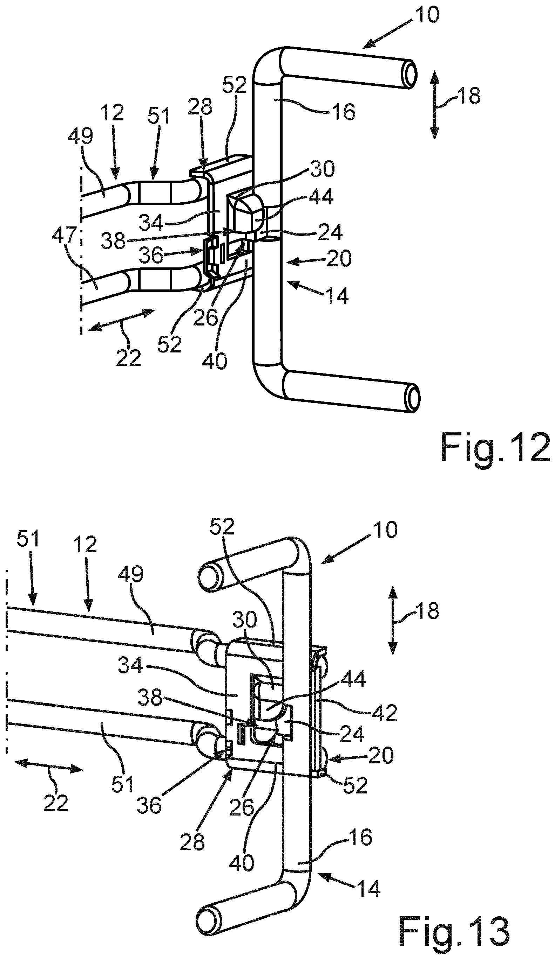

Während Fig. 1 bis 8 die erste Ausführungsform zeigen, zeigen Fig. 9 bis 13 eine zweite Ausführungsform der Befestigungsanordnung 10 und insbesondere der Befestigungseinrichtung 20. Während bei der ersten Ausführungsform das Abstützteil 12 als Auszugsschiene ausgebildet ist beziehungsweise eine solche Auszugsschiene umfasst, umfasst das Abstützteil 12 bei der zweiten Ausführungsform wenigstens zwei zumindest teilweise, insbesondere zumindest überwiegend oder vollständig, in vertikaler Richtung voneinander beabstandete horizontale beziehungsweise horizontal verlaufende Stangen 47 und 49, welche als starre Stangen ausgebildet sind. Die jeweilige Stange 47 beziehungsweise 49 weist dabei einen zumindest im Wesentlichen runden Querschnitt, insbesondere Vollquerschnitt, auf. Dabei sind die jeweiligen Stangen 47 und 49 beidenends, insbesondere reversibel lösbar oder nicht-zerstörungsfrei lösbar, mit dem jeweiligen Befestigungselement 28 verbunden, sodass die Stangen 47 und 49 ein Stangenpaar 51 bilden. Das Stangenpaar 51 kann mittels des jeweiligen Befestigungselements 28 auf die in Bezug auf die erste Ausführungsform beschriebene Weise an der jeweiligen vertikalen Stange 16 befestigt werden. Da die Stangen 47 und 49 in vertikaler Richtung voneinander beabstandet sind, ist zwischen den Stangen 47 und 49 ein Abstand 50 vorgesehen, in welchen beispielsweise ein Gargutträger, insbesondere in horizontaler Richtung, eingeschoben werden kann. Der Gargutträger kann dadurch beispielsweise auf die untere Stange 47 aufgelegt und somit in vertikaler Richtung nach unten hin an der Stange 47 abgestützt werden. Die obere Stange 49 fungiert dabei beispielsweise als Kippschutz, sodass der Gargutträger nicht übermäßig verkippen kann. Die vorigen und folgenden Ausführungen zur ersten Ausführungsform sind dabei ohne weiteres auf die zweite Ausführungsform übertragbar und umgekehrt.

Insgesamt ist erkennbar, dass die Befestigungseinrichtung 20 ein Befestigungssystem ist, mittels welchem sowohl Auszugsschienen als auch Auflagestangen wie beispielsweise die Stangen 47 und 49 an den vertikalen Stangen 16 befestigt werden können. Das jeweilige Abstützteil 12 lässt sich somit zumindest im Wesentlichen direkt an die vertikalen Stangen 16 anbringen, insbesondere dann, wenn die Lasche 24 einstückig mit der jeweiligen vertikalen Stange 16 ausgebildet ist. Insbesondere ist es möglich, das Befestigungselement 28 unter Zuhilfenahme der Sperrfeder 36 mit der Lasche 24 zu verrasten beziehungsweise zu verklipsen, sodass das Befestigungselement 28 beispielsweise auf einfache Weise an die Stange 16 beziehungsweise an die Lasche 24 angeklipst werden kann.

Sind beispielsweise mehrere, in vertikaler Richtung aufeinanderfolgend angeordnete und voneinander beabstandete Laschen 24 vorgesehen, so kann das Befestigungselement 28 bedarfsgerecht in unterschiedlichen Höhen beziehungsweise in definierter Höhe an der jeweiligen Stange 16 befestigt werden.

Bei der ersten Ausführungsform und bei der zweiten Ausführungsform kann das Befestigungselement 28 auf Wunsch wieder zerstörungsfrei von der Stange 16 gelöst werden und beispielsweise daraufhin in einer anderen vordefinierten Höhenlage wieder befestigt werden. Dadurch kann ein sehr flexibles Gitter, insbesondere Backofengitter, geschaffen werden. Hierbei hat eine Person freie Auswahl hinsichtlich der Höhe beziehungsweise Höhenlage, auf beziehungsweise in der das Befestigungselement 28 befestigt werden soll, sodass das Backofengitter frei konfiguriert werden kann. Dabei können Auflagestangen durch Auszugsschienen ersetzt werden und umgekehrt.

Die beispielsweise als Prägelasche ausgebildete Lasche 24 wird beispielsweise bei der Herstellung der jeweiligen vertikalen Stange 16 mithilfe eines Prägewerkzeugs direkt aus der Stange 16, insbesondere aus ihrem Stangenvolumen, herausgeprägt. Alternativ ist es denkbar, die jeweilige Lasche 24 separat von der Stange 16 auszubilden und durch ein Fügeverfahren wie beispielsweise Schweißen an der jeweiligen Stange 16 anzubringen.

Zum Befestigen, insbesondere zum Anklipsen, des Befestigungselements 28 wird das beispielsweise als Clip oder Rastelement ausgebildete Befestigungselement 28 etwas oberhalb der jeweiligen Lasche 24 an die vertikale Stange 16 gedrückt und dann in vertikaler Richtung nach unten relativ zur Lasche 24 und relativ zur Stange 16 bewegt, insbesondere geschoben. Dabei wird die Sperrfeder 36 nach hinten beziehungsweise in Richtung der Abstützteils 12 ausgelenkt und dadurch elastisch verformt. Hat die Lasche 24 die als Anschlag fungierende Abstützwandung 30 erreicht, so hat die Sperrfeder 36 die Lasche 24 überstrichen, und die Sperrfeder 36 kann elastisch zurückfedern beziehungsweise zurückspringen und insbesondere in die Ausnehmung 38 eingreifen. Das Befestigungselement 28 kann dann nicht nach oben herausrutschen, da eine solche Bewegung durch die Sperrfeder 36 blockiert ist.

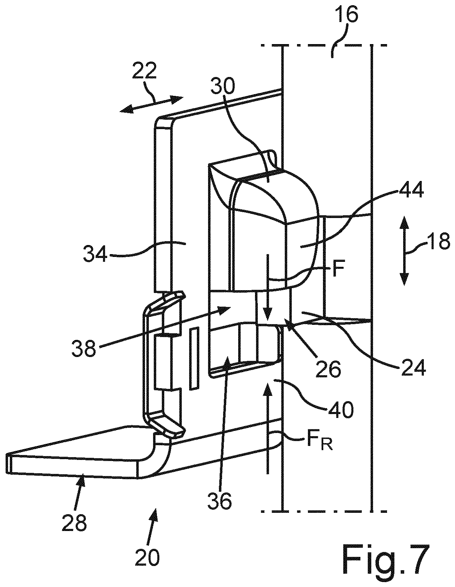

Dadurch, dass die Sperrfeder 36 zumindest teilweise in vertikaler Richtung nach unten durch den Wandungsbereich 40 überdeckt ist, sind die Sperrfeder 36 und der Grundkörper 34 so ausgebildet, dass sich die Sperrfeder 36 in vertikaler Richtung nach unten auf dem beispielsweise eine Kante, insbesondere eine Blechkante, des Befestigungselements 28 bildenden Wandungsbereich 40 abstützen kann. Dadurch können auch hohe Kräfte von der Lasche 24 auf die Sperrfeder 36 und von dieser auf den Grundkörper 34 übertragen werden, ohne dass es zu übermäßigen Verformungen der Sperrfeder 36 kommt. Derartige Kräfte sind beispielsweise in Fig. 7 durch einen Kraftpfeil F veranschaulicht. Aus einer solchen, durch den Kraftpfeil F veranschaulichten Kraft resultiert eine Reaktionskraft, die in Fig. 7 durch einen Kraftpfeil F_{R} veranschaulicht ist. Mittels der Reaktionskraft, die der durch den Kraftpfeil F veranschaulichten Kraft entgegenwirkt, können übermäßige Verformungen der Sperrfeder 36 in vertikaler Richtung nach unten vermieden werden.

Die Sperrfeder 36 ist beispielsweise formschlüssig an dem Grundkörper 34 gehalten und somit mit dem Grundkörper 34 verrastet beziehungsweise verklipst. Alternativ oder zusätzlich sind andere Fügeverfahren zum Befestigen der Sperrfeder 36 an dem Grundkörper 34 denkbar.

Aus Fig. 9 bis 13 ist beispielsweise erkennbar, dass das Befestigungselement 28 bei der zweiten Ausführungsform sich lediglich dadurch von dem Befestigungselement 28 der ersten Ausführungsform unterscheidet, dass das Befestigungselement 28 oben und unten eine beispielsweise um 90 Grad gebogene und beispielsweise eine Kante des Befestigungselements 28 bildende Zunge 52 aufweist, über welche beispielsweise das Befestigungselement 28 besonders gut mit den Stangen 47 und 49 verbunden, insbesondere verschweißt, werden kann.

### BEZUGSZEICHENLISTE:

- 10: Befestigungsanordnung
- 12: Abstützteil
- 14: Gestell
- 16: Stange
- 18: Doppelpfeil
- 20: Befestigungseinrichtung
- 22: Doppelpfeil
- 24: Lasche
- 26: Ende
- 28: Befestigungselement
- 30: Abstützwandung
- 32: Stecköffnung
- 34: Grundkörper
- 36: Sperrfeder
- 38: Ausnehmung
- 40: Wandungsbereich
- 42: Zunge
- 44: Wandung
- 46: Pfeil
- 47: Stange
- 48: Pfeil
- 49: Stange
- 50: Abstand
- 51: Stangenpaar
- 52: Zunge

## Patentansprüche

1. Befestigungsanordnung (10) eines zum Abstützen eines Gargutträgers ausgebildeten Abstützteils (12) an einem wenigstens zwei in horizontaler Richtung (22) voneinander beabstandete und in vertikaler Richtung (18) verlaufende Stangen (16) aufweisenden Gestell (14), bei welcher das Abstützteil (12) mittels wenigstens einer Befestigungseinrichtung (20) an dem Gestell (14) befestigt ist, wobei:
- an der jeweiligen Stange (16) eine jeweilige Lasche (24) der Befestigungseinrichtung (20) vorgesehen ist, wobei die Lasche (24) direkt von der jeweiligen Stange (16) in horizontaler Richtung (22) absteht und ein freies, vollständig von der jeweils anderen Stange (16) beabstandetes Ende (26) aufweist;
- der jeweiligen Lasche (24) ein mittels der Lasche (24) an der jeweiligen Stange (16) befestigtes und mit dem Abstützteil (12) verbundenes Befestigungselement (28) der Befestigungseinrichtung (20) zugeordnet ist, wobei das Abstützteil (12) über das Befestigungselement (28) an der jeweiligen Stange (16) befestigt ist; und
- das Befestigungselement (28) wenigstens eine in vertikaler Richtung (18) nach unten offene und in vertikaler Richtung (18) nach oben durch eine Abstützwandung (30) des Befestigungselements (28) begrenzte Stecköffnung (32) aufweist, in welche zum Befestigen des Befestigungselements (28) an der Lasche (24) die Lasche (24) durch eine in vertikaler Richtung (18) von oben nach unten verlaufende und relativ zur Lasche (24) erfolgende translatorische Bewegung des Befestigungselements (28) eingesteckt ist, wobei das Befestigungselement (28) über die Abstützwandung (30) in vertikaler Richtung (18) nach unten an der Lasche (24) abgestützt ist,
**dadurch gekennzeichnet, dass**
das jeweilige Befestigungselement (28) wenigstens ein der Abstützwandung (30) in vertikaler Richtung gegenüberliegendes Abstützelement (36) aufweist, über welches das Befestigungselement (28) in vertikaler Richtung (18) nach oben an der Lasche (24) abgestützt ist, wobei das jeweilige Befestigungselement (28) wenigstens eine Zunge (42) aufweist, mittels welcher das jeweilige Befestigungselement (28) an der jeweiligen Stange (16) in horizontaler Richtung (22) abgestützt ist, und wobei das Abstützelement (36) in eine Ausnehmung (38) des Befestigungselements (28) eingreift und in vertikaler Richtung (18) nach unten an einem die Ausnehmung (38) in vertikaler Richtung (18) nach unten zumindest teilweise begrenzenden Wandungsbereich (40) des Befestigungselements (28) abgestützt ist.

2. Befestigungsanordnung (10) nach Anspruch 1,
**dadurch gekennzeichnet, dass**
das Gestell (14), das Abstützteil (12) und die Befestigungseinrichtung (20) in einem Garraum eines, insbesondere elektrischen, Gargeräts angeordnet sind.

3. Befestigungsanordnung (10) nach Anspruch 1 oder 2,
**dadurch gekennzeichnet, dass**
die Ausnehmung (38) als Durchgangsöffnung ausgebildet ist.

4. Befestigungsanordnung (10) nach einem der vorhergehenden Ansprüche,
**dadurch gekennzeichnet, dass**
das Befestigungselement (28) einen Grundkörper (34) aufweist.

5. Befestigungsanordnung (10) nach Anspruch 4,
**dadurch gekennzeichnet, dass**
das Abstützelement (36) einstückig mit dem Grundkörper (34) des Befestigungselements (28) oder separat von dem Grundkörper (34) ausgebildet und, insbesondere formschlüssig, an dem Grundkörper (34) gehalten ist.

6. Befestigungsanordnung (10) nach Anspruch 4 oder 5,
**dadurch gekennzeichnet, dass**
das Abstützelement (36) als eine federnd an dem Grundkörper (34) des Befestigungselements (28) gehaltene Sperrfeder (36) ausgebildet, über welche das Befestigungselement (28) in vertikaler Richtung (18) nach oben an der Lasche (24) abstützbar ist.

7. Befestigungsanordnung (10) nach Anspruch 4 oder 5,
**dadurch gekennzeichnet, dass**
das Abstützelement (36) als plastisch verformtes oder verformbares, insbesondere biegbares oder gebogenes, Abstützelement (36) ausgebildet ist.

8. Befestigungsanordnung (10) nach einem der Ansprüche 4 bis 7,
**dadurch gekennzeichnet, dass**
die Abstützwandung (30) einstückig mit dem Grundkörper (34) ausgebildet ist.

9. Befestigungsanordnung (10) nach einem der vorhergehenden Ansprüche,
**dadurch gekennzeichnet, dass**
die Zunge (42) einstückig mit der Abstützwandung (30) ausgebildet ist.

10. Befestigungsanordnung (10) nach Anspruch 8 oder 9 in dessen Rückbezug auf einen der Ansprüche 4 bis 7,
**dadurch gekennzeichnet, dass**
die Zunge (42) einstückig mit dem Grundkörper (34) ausgebildet ist.

11. Befestigungsanordnung (10) nach einem der vorhergehenden Ansprüche,
**dadurch gekennzeichnet, dass**
die jeweilige Lasche (24) einstückig mit der jeweiligen Stange (16) ausgebildet, insbesondere als Prägelasche ausgebildet und durch Prägen der jeweiligen Stange (16) hergestellt, ist.

## Claims

1. A fixing assembly (10) of a support part (12) formed for supporting a carrier of food to be cooked on a rack (14) comprising at least two rods (16) spaced from each other in horizontal direction (22) and extending in vertical direction (18), in which the support part (12) is fixed to the rack (14) by means of at least one fixing device (20), wherein:
- a respective flap (24) of the fixing device (20) is provided at the respective rod (16), wherein the flap (24) directly projects from the respective rod (16) in horizontal direction (22) and comprises a free end (26) completely spaced from the respectively other rod (16);
- a fixing element (28) of the fixing device (20) fixed to the respective rod (16) by means of the flap (24) and connected to the support part (12) is associated with the respective flap (24), wherein the support part (12) is fixed to the respective rod (16) via the fixing element (28); and
- the fixing element (28) comprises at least one plug opening (32) open downwards in vertical direction (18) and bounded upwards in vertical direction (18) by a support wall (30) of the fixing element (28), into which the flap (24) is plugged by a translational movement of the fixing element (28) extending from top to bottom in vertical direction (18) and effected in relation to the flap (24) for fixing the fixing element (28) to the flap (24), wherein the fixing element (28) is supported on the flap (24) downwards in vertical direction (18) via the support wall (30),
**characterized in that**
the respective fixing element (28) comprises at least one support element (36) opposing the support wall (30) in vertical direction, via which the fixing element (28) is supported on the flap (24) upwards in vertical direction (18), wherein the respective fixing element (28) comprises at least one tongue (42), by means of which the respective fixing element (28) is supported on the respective rod (16) in horizontal direction (22), and wherein the support element (36) engages with a recess (38) of the fixing element (28) and is supported downwards in vertical direction (18) on a wall area (40) of the fixing element (28) at least partially bounding the recess (38) downwards in vertical direction (18).

2. The fixing assembly (10) according to claim 1,
**characterized in that**
the rack (14), the support part (12) and the fixing device (20) are arranged in a cooking space of an, in particular electrical, cooking appliance.

3. The fixing assembly (10) according to claim 1 or 2,
**characterized in that**
the recess (38) is formed as a passage opening.

4. The fixing device (10) according to any one of the preceding claims,
**characterized in that**
the fixing element (28) comprises a base body (34).

5. The fixing assembly (10) according to claim 4,
**characterized in that**
the support element (36) is formed integrally with the base body (34) of the fixing element (28) or separately from the base body (34), in particular is retained on the base body (34) in form-fit manner.

6. The fixing assembly (10) according to claim 4 or 5,
**characterized in that**
the support element (36) is formed as a locking spring (36) resiliently retained on the base body (34) of the fixing element (28), via which the fixing element (28) can be supported on the flap (24) upwards in vertical direction (18).

7. The fixing assembly (10) according to claim 4 or 5,
**characterized in that**
the support element (36) is formed as a plastically deformed or deformable, in particular bendable or bent, support element (36).

8. The fixing assembly (10) according to any one of claims 4 to 7,
**characterized in that**
the support wall (30) is formed integrally with the base body (34).

9. The fixing assembly (10) according to any one of the preceding claims,
**characterized in that**
the tongue (42) is formed integrally with the support wall (30).

10. The fixing assembly (10) according to claim 8 or 9 in relation thereof to one of claims 4 to 7,
**characterized in that**
the tongue (42) is formed integrally with the base body (34).

11. The fixing assembly (10) according to any one of the preceding claims,
**characterized in that**
the respective flap (24) is formed integrally with the respective rod (16), in particular formed as a stamping flap and produced by stamping the respective rod (16).

## Revendications

1. Agencement de fixation (10) d'une partie de soutien (12) formée pour appuyer un support de cuisson sur un bâti (14) comportant au moins deux barres (16) espacées les unes des autres dans la direction horizontale (22) et s'étendant dans la direction verticale (18), dans lequel la partie de soutien (12) est fixée au bâti (14) au moyen d'au moins un dispositif de fixation (20), dans lequel :
- une patte respective (24) du dispositif de fixation (20) est prévue à la barre respective (16), dans laquelle la patte (24) fait saillie directement de la barre respective (16) dans la direction horizontale (22), et comporte une extrémité libre complètement espacée de l'autre barre respective (16) ;
- un élément de fixation (28) du dispositif de fixation (20) est attribué à la patte respective (24), fixé au moyen de la patte (24) à la barre respective (16) et relié à la partie de soutien (12), dans lequel la partie de soutien (12) est fixée à la barre respective (16) par l'élément de fixation (28) ; et
- l'élément de fixation (28) comporte au moins une ouverture d'insertion (32) ouverte dans la direction verticale (18) vers le bas et limitée dans la direction verticale (18) vers le haut par une paroi d'appui (30) de l'élément de fixation (28), dans quelle ouverture la patte (24), pour la fixation de l'élément de fixation (28) à la patte (24), est insérée par un mouvement de translation de l'élément de fixation (28) s'étendant dans une direction verticale (18) de haut en bas et ayant lieu par rapport à la patte (24), dans lequel l'élément de fixation (28) est appuyé à la patte (24) par la paroi d'appui (30) dans la direction verticale (18) vers le bas,
**caractérisé en ce que**
l'élément de fixation respective (28) comporte au moins un élément d'appui (36) faisant face à la paroi d'appui (30) dans la direction verticale (18), par lequel l'élément de fixation (28) est appuyé à la patte (24) dans la direction verticale (18) vers le haut, dans lequel l'élément de fixation respective (28) comporte au moins une languette (42), au moyen de laquelle l'élément de fixation respective (28) est appuyé à la barre respective (16) dans la direction horizontale (22), et dans lequel l'élément d'appui (36) s'engage dans un évidement (38) de l'élément de fixation (28), et est appuyé dans la direction verticale (18) vers le bas à une zone de paroi (40) de l'élément de fixation limitant au moins partiellement l'évidement (38) dans la direction verticale (18) vers le bas.

2. Agencement de fixation (10) selon la revendication 1,
**caractérisé en ce que**
le bâti (14), la partie de soutien (12) et le dispositif de fixation (20) sont agencés dans un espace de cuisson d'un appareil de cuisson, notamment un appareil de cuisson électrique.

3. Agencement de fixation (10) selon la revendication 1 ou 2,
**caractérisé en ce que**
l'évidement (38) est formé en tant qu'ouverture traversante.

4. Agencement de fixation (10) selon l'une quelconque des revendications précédentes,
**caractérisé en ce que**
l'élément de fixation (28) comporte un corps de base (34).

5. Agencement de fixation (10) selon la revendication 4,
**caractérisé en ce que**
l'élément d'appui (36) est solidaire du corps de base (34) de l'élément de fixation (28) ou séparé du corps de base (34), et est maintenu au corps de base (34), notamment à engagement positif.

6. Agencement de fixation (10) selon la revendication 4 ou 5,
**caractérisé en ce que**
l'élément d'appui (36) est formé en tant que ressort d'arrêt (36) maintenu de manière élastique au corps de base (34) de l'élément de fixation (28) par lequel l'élément de fixation (28) peut être appuyé à la patte (24) dans la direction verticale (18) vers le haut.

7. Agencement de fixation (10) selon la revendication 4 ou 5,
**caractérisé en ce que**
l'élément d'appui (36) est formé en tant qu'élément d'appui (36) déformable plastiquement ou déformable, notamment pouvant être courbé, ou courbé.

8. Agencement de fixation (10) selon l'une quelconque des revendications 4 à 7,
**caractérisé en ce que**
la paroi d'appui (30) est solidaire du corps de base (34).

9. Agencement de fixation (10) selon l'une quelconque des revendications précédentes,
**caractérisé en ce que**
la languette (42) est solidaire de la paroi d'appui (30).

10. Agencement de fixation (10) selon la revendication 8 ou 9 en sa référence à l'une quelconque des revendications 4 à 7,
**caractérisé en ce que**
la languette (42) est solidaire du corps de base (34).

11. Agencement de fixation (10) selon l'une quelconque des revendications précédentes,
**caractérisé en ce que**
la patte respective (24) est solidaire de la barre respective (16), notamment est formée en tant que patte d'estampage, et est fabriquée par estampage de la barre respective (16).
